# EUROPEAN PATENT APPLICATION

(11) **EP 2 112 870 A1**
(43) Veröffentlichungstag der Anmeldung: **28.10.2009**
(21) Anmeldenummer: 07834960.2
(22) Anmeldetag: 03.08.2007
(51) Int. Cl.: H05H 1/02, G21B 1/00

(54) **PLASMAENERGIEWANDLER UND ZUR HERSTELLUNG DES WANDLERS VERWENDETER ELEKTROMAGNETISCHER REAKTOR**

(30) Priorität: 12.02.2007 RU 2007105087
(71) Anmelder: Poltoratsky, Boris Fedorovich, Moscow 117208 (RU)
(72) Erfinder: Poltoratsky, Boris Fedorovich, Moscow 117208 (RU)
(74) Vertreter: Jeck, Anton
(86) Internationale Anmeldenummer: PCT/RU2007/000428
(87) Internationale Veröffentlichungsnummer: WO 2008/100174

(57) **Zusammenfassung**

Die Erfindung betrifft einen Plasma-Energiewandler mit einer Arbeitskammer und einem Arbeitsmedium, welches in das Feld eines elektromagnetischen Plasmaeinschließungs- und Plasmaerwärmungssystem gesetzt ist. Damit die Plasmastabilität erhöht und die Reaktionszeit des Plasma-Energiewandlers verlängert ist, sieht die Erfindung vor, dass das elektromagnetische System zur Plasmaeinschließung und -erwärmung mindestens zwei elektromagnetische Wirbelreaktoren mit Gegenladungen und mit gegenseitig entgegengerichteten Spins aufweist, um die Plasmastabilität zu erhöhen und die Reaktionszeit zu verlängern und dass die Wirbelfelder der Spins sich in der Arbeitskammer befinden. Ein elektromagnetischer Wirbelreaktor zum Aufbau eines Plasma-Energiewandlers ist **dadurch gekennzeichnet, dass** das System zur Erregung des Plasmazustandes des Arbeitsmediums einen Konzentrator eines hochgespannten elektromagnetischen Hochfrequenzwirbelfeldes aufweist, um die Plasmastabilität zu erhöhen und die Reaktionszeit zu verlängern, und dass die Achse des Konzentrators mit der Achse des Reaktorwirbelfeldes zusammenfällt.

## Beschreibung

Die Erfindung betrifft einen Plasma-Energiewandler und einen elektromagnetischen Wirbelreaktor zum Aufbau eines Plasma-Energiewandlers.

Die Erfindung ist in der Gerätetechnik auf dem Gebiet der Plasmaphysik einsetzbar. Insbesondere bezieht sie sich auf Systeme, welche zur hochenergetischen Plasmaeinschließung dienen. Das ist zur Sicherstellung von spezifischen Bedingungen der Verläufe von Hochtemperaturreaktionen einschließlich einer lenkbaren Nuklearfusionsreaktion erforderlich. Die Erfindung kann auch zur Separation von Rohöl mittels Plasmas sowie zur Einleitung von anderen Hochtemperaturreaktionen eingesetzt werden.

Die Einschließung von Hochtemperaturplasma ist ein Kernproblem der gesteuerten Kernfusion. Zurzeit gibt es zwei Verfahren der Plasmaeinschließung.

Das ist zum einen das Inertialverfahren, z. B. mit der Einleitung der Reaktion mittels eines Lasers (s. z.B. das US-Patent Nr. 6,418,177; Stauffer et. al.; vom 9.07.2002; IPC: H05H 1/22, US Cl: 376/152).

Das zweite Verfahren ist die Einschließung mittels eines Magnetfeldes (s. z. B., das US-Patent Nr. 6,664,740; Rostoker et al.; vom 16.12.2003; IPC: G21 D 7/00 , US Cl: 315/111.41).

Die bekannten Probleme des ersten Verfahrens sind die Konzentration von hoher Energie innerhalb eines sehr kleinen Umfangs und das komplizierte System der Zuführung von Arbeitsmedium.

Die Unterdrückung von zahlreichen Labilitäten ist das Hauptproblem der Systeme, die die magnetische Plasmaeinschließung einsetzen. Alle Labilitäten sind dabei gasdynamischer Herkunft. Sie hängen mit mehreren Schwingmodi im magnetischen Plasma zusammen. Deswegen können sie praktisch nie vollständig entfernt werden.

Der Prototyp gegenüber den vorgeschlagenen technischen Lösungen ist eine Einrichtung, die aus dem US-Patent Nr. 7,119,491 B2 vom 10.10.2006, IPC H01J 7/24, U.S.Cl. 315/111.61 bekannt ist.

Diese bekannte Einrichtung enthält eine Arbeitskammer mit einem Arbeitsmedium. Das Arbeitsmedium befindet sich im elektromagnetischen Feld des Systems zur Plasmaeinschließung und -erwärmung. Die Einrichtung enthält auch ein System zur Erregung des Plasmazustandes des Arbeitsmediums in der Arbeitskammer. Als Basis für das elektromagnetische Einschließungs- und Erwärmungssystem dienen Elektromagnete. Sie bilden ein magnetisches kreisförmiges Toroidimpulsfeld mit einer zusätzlichen schraubenförmigen Komponente rings um die Torusachse aus.

Die Mängel dieser bekannten Einrichtung sind eine begrenzte Plasmastabilität und eine kurze Dauer der Fusionsreaktion. Diese Mängel hängen mit einer gasdynamischen Instabilität zusammen, die grundsätzlich nicht beseitigt werden kann.

Es ist Aufgabe der Erfindung, bei einem Plasma-Energiewandler die Plasmastabilität zu erhöhen und die Reaktionszeit zu verlängern.

Die gestellte Aufgabe wird durch die Merkmale des Anspruchs 1 gelöst.

Das gesetzte Ziel wird folgenderweise erreicht:

Das elektromagnetische System zur Plasmaeinschließung und -erwärmung des Plasma-Energiewandlers weist mindestens zwei elektromagnetische Wirbelreaktoren mit Gegenladungen und mit gegenseitig entgegengerichteten Spins auf. Die Wirbelfelder der Spins befinden sich in der Arbeitskammer.

Die Arbeitskammer kann als Durchflusskammer gefertigt sein. Sie kann mit einem Einlauf- und einem Auslaufkanal versehen sein, die mit einem Außenkreis verbunden sind. Der Außenkreis weist dabei einen mechanischen Energiewandler, einen Kühler, eine Sammelkammer und einen Verdichter auf, die hintereinander geschaltet sind.

Das Arbeitsmedium in der Arbeitskammer kann Flüssigkeitsphase aufweisen.

Das Arbeitsmedium in der Arbeitskammer kann auch feste Phase aufweisen.

Ein elektromagnetischer Wirbelreaktor zum Aufbau eines Pharma-Energiewandlers ist dabei dadurch erreicht, dass das System zur Erregung des Plasmazustandes des Arbeitsmediums jedes elektromagnetischen Wirbelreaktors einen Konzentrator eines hochgespannten elektromagnetischen Hochfrequenzwirbelfeldes aufweist. Die Achse dieses Feldes fällt mit der Achse des Reaktorwirbelfeldes zusammen.

Der Konzentrator des elektromagnetischen Hochfrequenzdrehfeldes kann in Form von einem Hohlleiter-Ringresonator ausgebildet sein. Der Hohlleiter-Ringresonator ist mit dem Arbeitsmedium verbunden, welches sich im Bereich der Achse des Reaktorwirbelfeldes befindet.

Der elektromagnetische Wirbelreaktor kann ein System zur Übertragung der elektrischen Ausgangsladung in den Bereich der Achse des Reaktorwirbelfeldes aufweisen.

Der elektromagnetische Wirbelreaktor kann ein System zur Vorionisierung des Arbeitsmediums im Bereich der Achse des Reaktorwirbelfeldes aufweisen.

Der elektromagnetische Wirbelreaktor kann auch ein System zur Übertragung des magnetischen Ausgangsmoments in den Bereich der Achse des Reaktorwirbelfeldes aufweisen.

Die Erfindung wird anhand eines in den Zeichnungen dargestellten Ausführungsbeispiels näher erläutert. Es zeigen:
- Fig. 1: einen Übersichtsschaltplan des Plasma-Energiewandlers,
- Fig. 2: die gegenseitige Anordnung von zwei elektromagnetischen Wirbelre- aktoren mit Gegenladungen und mit entgegengerichteten Spins,
- Fig. 3: die Konfiguration des elektrischen und des magnetischen Feldes so- wie des Poyntingschen Vektors in einer der Phasen des elektromag- netischen Hochfrequenzfeldes im Reaktor,
- Fig. 4: die Anordnung der Felder sowie die Richtung des Gesamtenergie- stroms,
- Fig. 5: den Übersichtsschaltplan des elektromagnetischen Wirbelreaktors mit dem in Schnitt dargestellten Konzentrator des elektromagnetischen Hochfrequenzwirbelfeldes und
- Fig. 6: die Gesamtansicht des Hohlleiterteils des elektromagnetischen Wir- belreaktors.

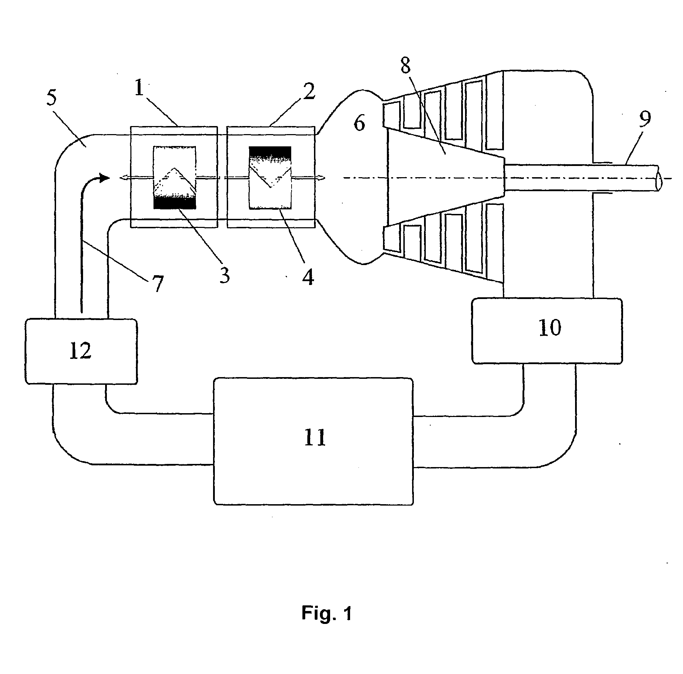

Der Übersichtsschaltplan des Plasma-Energiewandlers ist in Fig. 1 dargestellt. Der Plasma-Energiewandler weist einen ersten elektromagnetischen Wirbelreaktor 1 und einen zweiten elektromagnetischen Wirbelreaktor 2 auf. Ihre Wirbelzonen sind zwischen einem Einlaufkanal 5 und einem Auslaufkanal 6 angeordnet. Ein Arbeitsmedium 7 füllt den Einlaufkanal 5 aus. Der Auslaufkanal 6 ist mit einem Umsetzer 8 der mechanischen Energie verbunden. Der Umsetzer 8 der mechanischen Energie ist mit einer Ausgangswelle 9 gekoppelt. Der Ausgang des Umsetzers 8 der mechanischen Energie ist durch einen Kühler 10, eine Sammlungskammer 11 und einem Verdichter 12 mit dem Einlaufkanal 5 verbunden.

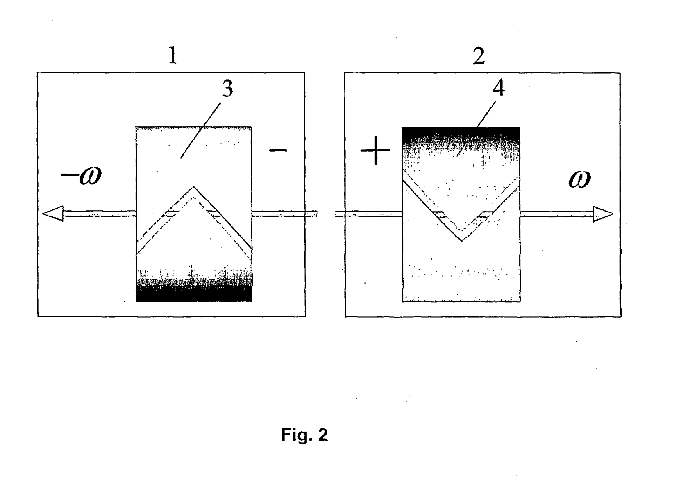

Die gegenseitige Anordnung von zwei elektromagnetischen Wirbelreaktoren 3 und 4, die in Fig. 2 dargestellt sind, ist durch Gegenladungen ihrer Wirbelzonen sowie durch gegenseitige Ausrichtung der Drehrichtungen, d. h. ihrer Spins, gekennzeichnet.

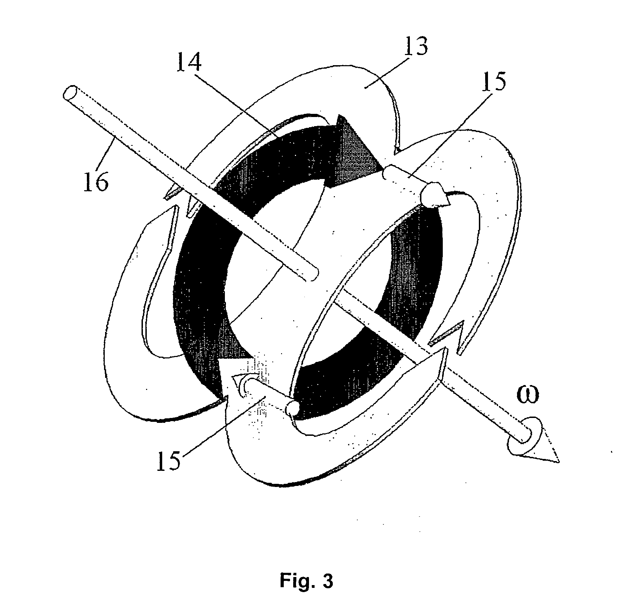

Die Feldkonfiguration ist in Fig. 3 dargestellt. Die Feldkonfiguration entspricht einer der Phasen des elektromagnetischen Wechselwirbeldrehfeldes. In diesem Wechselwirbeldrehfeld weist ein elektrisches Feld 13 die Form von einem Dipol auf. Dieser Dipol ist quer zur Senkrechtachse angeordnet. Ein Magnetfeld 14 in diesem elektromagnetischen Wirbel ist ringförmig, wobei der Ring in der Senkrechtebene liegt. Die Vektoren des elektrischen und des magnetischen Feldes liegen an ihren Schnittstellen senkrecht zueinander. Deswegen verlaufen Poyntingsche Vektoren 15 in diesem Fall senkrecht zu beiden Feldern und sind so ausgerichtet, dass sie ein mechanisches Moment in Bezug auf die gemeinsame Achse erzeugen. Die gemeinsame Achse fällt mit einer Achse eines Reaktorwirbelfeldes 16 zusammen.

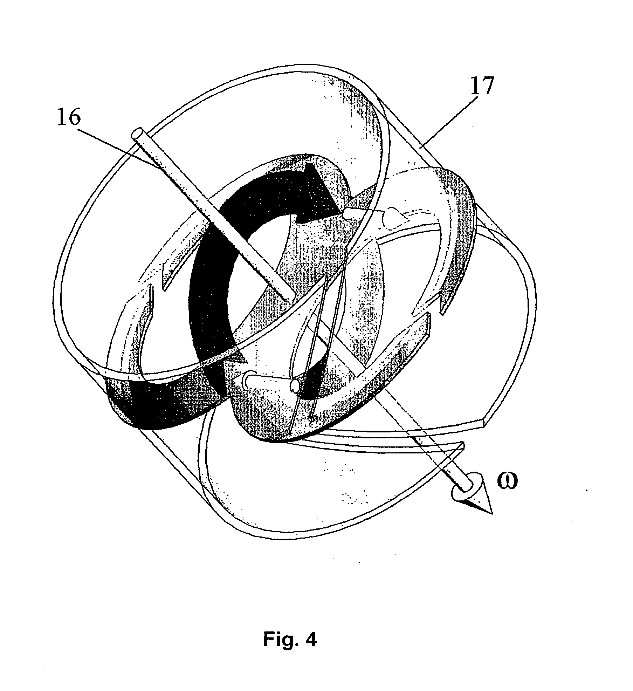

Der Mittelstrom einer Wirbelenergie 17 ist in Fig. 4 dargestellt. Er ist in Bezug auf das gesamte System der Wechselfelder so angeordnet, dass er einen Ring rings um die Achse des Reaktorwirbelfeldes 16 ausbildet.

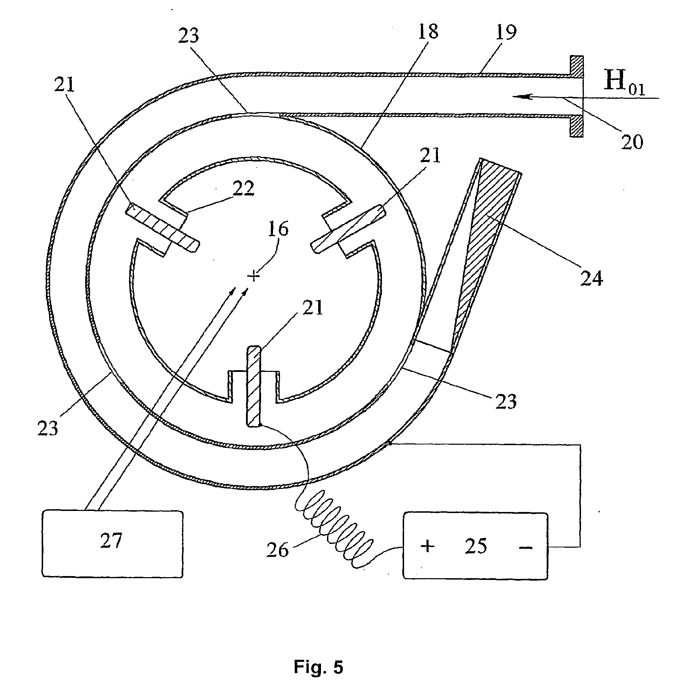

Der Übersichtsschaltplan eines elektromagnetischen Wirbelreaktors ist in Fig. 5 dargestellt. Der elektromagnetische Wirbelreaktor enthält einen im Schnitt dargestellten Ringresonator 18, der auf der Achse des Reaktorwirbelfeldes 16 angeordnet ist. Ein Einlaufhohlleiter 19 ist an der Außenseite des Ringresonators 18 befestigt. Eine Ultrahochfrequenzwelle 20 breitet sich im Einlaufhohlleiter 19 aus. In diesem Fall ist das Beispiel mit einer H₀₁-Welle ausgeführt. Der Ringresonator 18 enthält Elemente zur Verknüpfung mit dem Ringinnenraum im Bereich der Achse des Reaktorwirbelfeldes 16. Die elektrische Verbindung wird durch Bolzen 21 und eine magnetische Verbindung durch offene Hohlleiter 22 sichergestellt. Der Ringresonator 18 ist mit dem Einlaufhohlleiter 19 über Verknüpfungsöffnungen 23 verbunden. Das freie Ende des Einlaufhohlleiters 19 ist mit einem Abschlusswiderstand 24 verbunden. Die Bolzen 21 sind mit einer Gleichspannungsquelle 25 über eine Entkopplungseinheit in Form von einem induktiven Element 26 gleichspannungsgekoppelt. Das Feld einer ionisierenden Strahlungsquelle 27 deckt den Raum des Ringresonators 18 ab. Dieser Raum liegt im Bereich der Achse des Reaktorwirbelfeldes 16.

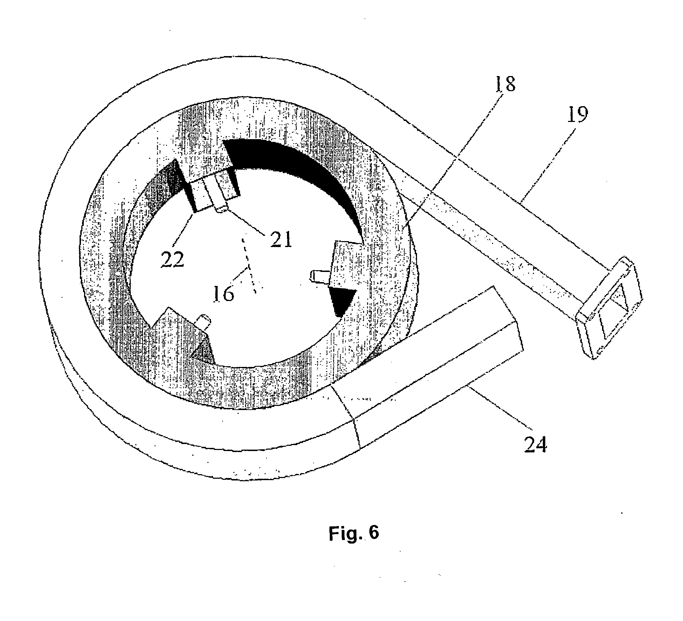

Die Gesamtansicht des Hohlleiterteils des elektromagnetischen Wirbelreaktors gemäß Fig. 6 umfasst die Darstellung des miteinander verbundenen Ringresonators 18, des Einlaufhohlleiters 19 und des Abschlusswiderstands 24. Der Ringresonator 18 ist auf der Achse des Reaktorwirbelfeldes 16 angeordnet und weist als Ausgangselemente die Bolzen 21 und die offenen Hohlleiter 22 auf.

Die vorgeschlagenen Einrichtungen funktionieren wie folgt.

In der Ausgangsstellung sind die achsennahen Arbeitsbereiche der elektromagnetischen Wirbelreaktoren 1 und 2 des Plasma-Energiewandlers mit kaltem Arbeitsmedium 7 gefüllt (s. Fig. 1). Sein Betrieb beginnt nach dem Einschalten der elektromagnetischen Wirbelreaktoren 1 und 2. Der Schaltplan von jedem dieser Wirbelreaktoren ist in Fig. 5 dargestellt. Das erfolgt, nachdem die Ultrahochfrequenzwelle 20 am Einlaufhohlleiter 19 von jedem der elektromagnetischen Wirbelreaktoren 1 und 2 an kommt. Gleichzeitig damit schalten sich in jedem Wirbelreaktor 1 und 2 die Gleichspannungsquelle 25 und die ionisierende Strahlungsquelle 27 ein. Die Ultrahochfrequenzwellen 20 kommen aus den Einlaufhohlleitern 19 über die Verknüpfungsöffnungen 23 in die Ringresonatoren 18 ein. Die Ultrahochfrequenzwelle 20 kommt über die Bolzen 21 und die offenen Hohlleiter 22 in die Bereiche des Wirbelfeldes 16 der Wirbelreaktoren 1 und 2 hinein. Hier werden elektromagnetische Ultrahochfrequenz-Wirbeldrehfelder erzeugt. Das induktive Element 26 stellt eine Entkopplung zwischen dem konstanten elektrischen Feld und dem elektromagnetischen Wechselfeld sicher. In der Ausgangsstellung sind im Wirbelbereich jedes Wirbelreaktors 1 und 2 keine Hochfrequenzentladungen vorhanden. Deswegen ist diese Prozessphase durch die höchste Güte der Ringresonatoren 18 gekennzeichnet. Als Ergebnis steigt die Stärke der Felder im Wirbelbereich exponential bis zur Überschlagsgröße an. Der Überschlag vermindert akut den äußeren Widerstand der Resonatorbelastung. Dadurch nimmt dementsprechend die Güte der Resonatoren 18 ab. So werden die Prozesse jeder der Entladungen stabilisiert. Im Endeffekt werden elektromagnetische Wirbel mit der in Fig. 3 und Fig. 4 abgebildeten Struktur erzeugt. Diese elektromagnetischen Wirbel sind auch im Werk von B.F. Poltoratsky "Elektromagnetischer Wirbel in der Elementarteilchenstruktur", M., 2006, beschrieben.

Die erzeugten elektromagnetischen Ultraschallfrequenzwirbel sind zueinander so ausgerichtet, wie es in Fig. 2 dargestellt ist. Sie haben Gegenladungen, und ihre Spins sind entgegengesetzt ausgerichtet. Deswegen ist ihre gegenseitige Anordnung im Raum instabil. Nach der Erzeugung der Wirbel fängt die Phase ihrer Zusammenwirkung an. Diese Zusammenwirkung führt dazu, dass die Wirbel einander näher kommen und sich aufheben, das heißt, es kommt die Vernichtung zustande. Dabei wird in einem kleinen Umfang die gesamte Energie abgegeben, welche in den Resonatoren 18 und in den elektromagnetischen Wirbeln angesammelt wurde. Die Dauer des Vernichtungsvorgangs ist viel kürzer als die Periode von einer Ultraschallfrequenzwelle 20. Diese Zeit ist so kurz, dass keine gas- bzw. hydrodynamischen Abläufe genug Zeit haben, um sich entwickeln zu können. Deswegen werden sie auch nicht den gesamten Impulsvorgang beeinflussen können. Wenn das Arbeitsmedium 7 ursprünglich in einem flüssigen oder festen Zustand war, so kommt ein Druckstoß zustande. Das bedingt den Aufbau von maximal zulässigen Drücken und Temperaturen im Bereich der Wirbelzusammenwirkung. Das regt kurzzeitig die chemische oder nukleare Hochtemperaturreaktion an.

Der oben beschriebene Vorgang weist einen Impulscharakter auf. Die Impulsfrequenz muss unter Berücksichtigung der Mindestdauer der Impulspause und der erforderlichen durchschnittlichen Prozessintensität gewählt werden. Die Mindestdauer der Impulspause wird durch die Beruhigungszeit des Systems festgelegt. Die Beruhigungszeit hängt mit der Hydrodynamik des Prozesses zusammen. Folglich ist die Beruhigungszeit um einige Größenordnungen länger als die Dauer des elektromagnetischen Vorgangs der Wirbelbildung. Deswegen können die Quellen der Ultraschallfrequenzwelle 20 mit großem Impulsschaltverhältnis, d.h. im Schonmodus, arbeiten. Durch die Änderung dieses Impulsschaltverhältnisses kann auch die Mittelintensität des Vorgangs je nach den Funktionalitäten der Ableitung der Nutzenergie und des Kühlungssystems geregelt werden. Die mittlere Zeit der Funktion der vorgeschlagenen Einrichtungen hat keine grundsätzlichen Einschränkungen.

Somit vereinigt die vorgeschlagene Erfindung die Vorteile eines Inertial- und eines magnetischen Verfahrens zur Plasmaeinschließung und beseitigt gleichzeitig die Nachteile dieser Verfahren. Das stellt eine Erhöhung der Plasmastabilität und eine unbegrenzte Verlängerung der Reaktionszeit sicher. Folglich ermöglicht die vorgeschlagene Erfindung, das gesetzte Ziel zu erreichen.

## Patentansprüche

1. Plasma-Energiewandler mit einer Arbeitskammer und einem Arbeitsmedium (7), welches in eines Feld des elektromagnetischen Plasmaeinschließungs-und Plasmaerwärmungssystems gesetzt ist,
**dadurch gekennzeichnet,**
**dass** das elektromagnetische System zur Plasmaeinschließung und -erwärmung mindestens zwei elektromagnetische Wirbelreaktoren (1 und 2) mit Gegenladungen und mit gegenseitig entgegengerichteten Spins aufweist, um die Plasmastabilität zu erhöhen und die Reaktionszeit zu verlängern, und
**dass** die Wirbelfelder der Spins sich in der Arbeitskammer befinden.

2. Plasma-Energiewandler nach Anspruch 1,
**dadurch gekennzeichnet,**
**dass** die Arbeitskammer als Durchflusskammer gefertigt ist und einen Einlauf-(5) und einen Auslaufkanal (6) enthält, die mit einem Außenkreis verbunden sind, und
**dass** der Außenkreis einen mechanischen Energiewandler (8), einen Kühler (10), eine Sammelkammer (11) und einen Verdichter (12) umfasst, die hintereinander geschaltet sind.

3. Plasma-Energiewandler nach Anspruch 1,
**dadurch gekennzeichnet,**
**dass** das Arbeitsmedium (7) in der Arbeitskammer Flüssigkeitsphase aufweist.

4. Plasma-Energiewandler nach Anspruch 1,
**dadurch gekennzeichnet,**
**dass** das Arbeitsmedium (7) in der Arbeitskammer eine feste Phase aufweist.

5. Elektromagnetischer Wirbelreaktor zum Aufbau eines Plasma-Energiewandlers, der eine Arbeitskammer und ein System zur Erregung des Plasmazustandes des Arbeitsmediums (7) in der Arbeitskammer aufweist,
**dadurch gekennzeichnet,**
**dass** das System zur Erregung des Plasmazustandes des Arbeitsmediums (7) einen Konzentrator eines hochgespannten elektromagnetischen Hochfrequenzwirbelfeldes aufweist, um die Plasmastabilität zu erhöhen und die Reaktionszeit zu verlängern, und
**dass** die Achse des Konzentrators mit der Achse des Reaktorwirbelfeldes zusammenfällt.

6. Elektromagnetischer Wirbelreaktor nach Anspruch 5,
**dadurch gekennzeichnet,**
**dass** der Konzentrator des elektromagnetischen Hochfrequenzdrehfeldes in Form von einem Hohlleiter-Ringresonator (18) ausgeführt ist, welcher mit dem im Bereich der Achse des Reaktorwirbelfeldes befindlichen Arbeitsmedium (7) verbunden ist.

7. Elektromagnetischer Wirbelreaktor nach Anspruch 5,
**dadurch gekennzeichnet,**
**dass** das er ein System zur Übertragung der elektrischen Ausgangsladung in den Bereich der Achse des Reaktorwirbelfeldes aufweist.

8. Elektromagnetischer Wirbelreaktor nach Anspruch 5,
**dadurch gekennzeichnet,**
**dass** er ein System zur Vorionisierung des Arbeitsmediums (7) im Bereich der Achse des Reaktorwirbelfeldes aufweist.

9. Elektromagnetischer Wirbelreaktor nach Anspruch 5,
**dadurch gekennzeichnet,**
**dass** er ein System zur Übertragung des magnetischen Ausgangsmoments in den Bereich der Achse des Reaktorwirbelfeldes aufweist.
